# EUROPÄISCHE PATENTSCHRIFT

(11) **EP 1 689 631 B1**
(45) Veröffentlichungstag und Bekanntmachung des Hinweises auf die Patenterteilung: **23.01.2008**
(21) Anmeldenummer: 04801197.7
(22) Anmeldetag: 02.12.2004
(51) Int. Cl.: B62D 5/04

(54) **ÜBERLAGERUNGSLENKUNG**
SUPERIMPOSED STEERING SYSTEM
DIRECTION A SUPERPOSITION

(30) Priorität: 06.12.2003 EP 03028023; 23.01.2004 DE 102004003582; 11.09.2004 DE 102004044075
(43) Veröffentlichungstag der Anmeldung: 16.08.2006
(73) Patentinhaber: ZF Lenksysteme GmbH, 73527 Schwäbisch Gmünd (DE)
(72) Erfinder: KRUTTSCHNITT, Andreas, 89522 Heidenheim (DE)
(86) Internationale Anmeldenummer: PCT/EP2004/013708
(87) Internationale Veröffentlichungsnummer: WO 2005/054034

(56) Entgegenhaltungen:
- EP-A- 0 807 765
- WO-A1-99/10132
- DE-A1- 10 214 655
- DE-A1- 10 253 465

## Beschreibung

Die Erfindung betrifft eine Überlagerungslenkung, insbesondere eine Servo- oder Hilfskraftlenkung für ein Fahrzeug nach dem Oberbegriff des Anspruchs 1.

Überlagerungslenkungen sind bekannt und zeichnen sich dadurch aus, dass dem von einem Fahrer eines Fahrzeugs an einer Lenkhandhabe gewählten Lenkwinkel bei Bedarf ein weiterer Drehwinkel durch einen Aktuator überlagert werden kann. Der zusätzliche Drehwinkel wird durch eine elektronische Steuerungs- und/oder Regelungseinrichtung gesteuert und dient zur Erhöhung der Fahrstabilität des Fahrzeugs oder zu sonstigen Zwecken.

Zur Erzeugung eines Zusatzwinkels oder weiteren Drehwinkels ist aus der DE 102 14 655 A1 bekannt, ein Planetenradgetriebe als Überlagerungsgetriebe anzuwenden, wobei eine Lenkwelle axial unterbrochen ist. Das so aus der Lenkwelle gebildete erste Getriebeeingangsglied und Getriebeausgangsglied wird von einem Stufenplaneten, der um Sonnenräder der Lenkwellenteile sich bewegt, drehbar verbunden. Die Stufenplaneten sind in einem Planetenradträger gelagert. Der Planetenradträger ist wiederum mit einem Schraub- oder Schneckengetriebe um die Lenkwelle und deren Sonnenräder bewegbar, wobei die Drehbewegung des Planetenradträgers mit Hilfe einer Schraube oder Schnecke an einem als Schnecke ausgebildeten zweiten Getriebeeingangsglied des Überlagerungsgetriebes ausgeführt wird.
Dem zweiten Getriebeeingangsglied ist eine Sperreinrichtung zugeordnet, die ein ausrückbares, mechanisches Verbindungselement aufweist, welches ein Element des zweiten Getriebeeingangsgliedes zeitweilig an einem feststehenden Bauteil z.B. einem Getriebegehäuse, einem Fahrzeugrahmen oder dergleichen arretiert.

Die DE 199 06 703 A1 beschreibt ein Stellglied zum überlagerten Lenkeingriff in einer Fahrzeug-Lenkvorrichtung, mit einer Eingangswelle zum Ankoppeln an das Lenkrad der Lenkvorrichtung und einer Ausgangswelle zum Ankoppeln an das Lenkgetriebe der Lenkvorrichtung, mit einem Elektromotor, der einen in einem Motorgehäuse aufgenommen Stator und einen auf einer mit der Ausgangswelle über ein Überlagerungsgetriebe verbundenen Rotorwelle drehfest sitzenden Rotor aufweist. Das Überlagerungsgetriebe ist als Planetenradgetriebe ausgebildet, wobei bei einer Fehlfunktion des Elektromotors die Eingangswelle mit der Ausgangswelle über eine elektromagnetische Bremse fest verbunden werden kann.

Es sind weitere Überlagerungslenkungen bekannt, die als Überlagerungsgetriebe ein Well- oder Pulsatorgetriebe aufweisen. Der Servomotor solcher Wellgetriebe stützt aber sein Drehmoment an der Lenksäule ab. Zudem benötigen diese Wellgetriebe ein stabiles Gehäuse um das Drehmoment und den Drehwinkel an der Lenkhandhabe auf die Getriebeausgangswelle des Überlagerungsgetriebes zu übertragen.

Der Erfindung liegt die Aufgabe zugrunde, eine spielfreie, einfache Überlagerungslenkung für ein Fahrzeug zu schaffen die auch bei Leistungsflussumkehr oder bei einem Ausfall des Servomotors einen sicheren, zuverlässigen Betrieb ermöglicht.

Die Aufgabe wird mit einer Überlagerungslenkung mit den Merkmalen des Anspruchs 1 gelöst.

Dadurch dass das zweite Getriebeeingangsglied, das vorzugsweise als Welle ausgebildet ist, über eine automatisch richtungsgeschaltete Kupplung, wie einen Freilauf auf das Überlagerungsgetriebe so wirkt, dass bei Leistungsflußumkehr oder einer Außerbetriebstellung des Servomotors eine Relativbewegung des ersten Getriebeeingangsgliedes und eines Getriebeausgangsgliedes verhindert ist, ist auf einfache Weise eine sichere Funktion der Überlagerungslenkung ermöglicht. Das Überlagerungsgetriebe ist als Wellgetriebe oder harmonic-drive ausgebildet und kann aufgrund seiner Wirkungsweise ohne Gehäuse ausgebildet sein.

Bevorzugte Ausführungen ergeben sich aus den Unteransprüchen.

Die richtungsgeschaltete Kupplung ist wegen der zum Teil hohen Drehzahlen des zweiten Getriebeeingangsgliedes als Klemmfreilauf und bevorzugt als Klemmrollenfreilauf der zweirichtungsgeschaltet ist, ausgebildet.

Das Wellgetriebe weist ein erstes Getriebeeingangsglied auf, das als Welle ausgebildet ist, die drehfest mit einer Lenkwelle und einer Lenkhandhabe des Fahrzeugs sowie drehfest mit einer radialflexiblen Abrollbuchse (flexspline) des Wellgetriebes verbunden ist. Zudem ist die radialflexible Abrollbuchse oder das erste Getriebeeingangsglied an der radialflexiblen Abrollbuchse drehfest mit einem Klemmring der richtungsgeschalteten Kupplung verbunden. Das zweite Getriebeeingangsglied ist als Welle die von dem Servomotor angetrieben ist, ausgebildet. Das zweite Getriebeeingangsglied ist drehfest über einen Schaltkäfig der richtungsgeschalteten Kupplung mit einem exzentrischen, insbesondere ellipsenförmigen Antriebskern des Wellgetriebes verbindbar. Der exzentrische Antriebskern greift axial in die radialflexible Abrollbuchse (flexspline) des Wellgetriebes ein, wobei ein oder mehrere Umfangsabschnitte einer Außenmantelfläche der radialflexiblen Abrollbuchse in fortlaufendem Wechsel mit einer im wesentlichen zylindrischen Stützfläche eines drehfest mit einem Getriebeausgangsglied verbundenen Stützrings in Eingriff ist.

Das Getriebeausgangsglied ist mit dem Stützring vorzugsweise fest verbunden und kann drehbar in einem Gestell oder Gehäuse des Wellgetriebes angeordnet sein. Auf diese Weise ist es ermöglicht, das Getriebeausgangsglied relativ zu dem ersten Getriebeeingangsglied zu drehen, wodurch ein positiver oder negativer Lenkwinkel zusätzlich zu dem vom Fahrer an der Lenkhandhabe eingegebenen Lenkwinkel in die Lenkwelle eingegeben werden kann.

Der exzentrische Antriebskern ist radial zwischen der ersten Getriebeeingangswelle und der radialflexiblen Abrollbuchse angeordnet und zur Verringerung des Bauraumbedarfs des Lenksystems radial möglichst gedrungen ausgeführt.

Der exzentrische Antriebskern greift bevorzugt axial über einen großen Teil in die radialflexible Abrollbuchse und in den bevorzugt glockenförmigen Stützring ein. Dadurch ergibt sich eine axial und radial kompakte Bauweise des Wellgetriebes und des Lenksystems. Der exzentrische Antriebskern wälzt sich mit einem flexiblen Kugellager in der radialflexiblen Abrollbuchse ab und verformt diese in fortlaufendem Wechsel. Dabei gelangen, in Abhängigkeit von der Querschnittsform des Antriebskernes, ein oder mehrer Umfangsabschnitte der Außenmantelfläche der radialflexiblen Abrollbuchse mit einer im wesentlichen zylindrischen Stützfläche des Stützringes in Eingriff. Der Stützring (circular-spline) umgibt radial die Abrollbuchse. Da der Umfang der Außenmantelfläche der radialflexiblen Abrollbuchse kürzer als der Umfang der zylindrischen Stützfläche des Stützringes ist, dreht sich der Stützring um diese Längendifferenz und somit das mit dem Stützring drehfest verbundene Getriebeausgangsglied, das wiederum mit einem ersten Getriebeeingangsglied eines Lenkgetriebes verbunden sein kann. Ein zusätzlicher Lenkwinkel in positiver oder negativer Richtung zu dem an der Lenkhandhabe eingegebenen Lenkwinkel ist dadurch mit großer Präzision auf den Stützring und das Getriebeausgangsglied aufbringbar.

Es kann zweckmäßig sein, den Servomotor als Hohlwellenmotor auszubilden, wobei ein Läufer des Servomotors um die erste Welle, die das erste Getriebeeingangsglied bildet, drehbar angeordnet ist. Das erste Getriebeeingangsglied und das zweite, als Hohlwelle ausgebildete Getriebeeingangsglied durchragen bevorzugt konzentrisch den exzentrischen Antriebskern. Die Hohlwelle ist drehfest mit dem Schaltkäfig des zweirichtungsgeschalteten Freilauf verbunden und der Schaltkäfig wirkt auf Klemmrollen des zweirichtungsgeschalteten Freilaufs und auf Mitnahmeflächen der Klemmhülse, nachdem Mitnahmenocken des Schaltkäfigs zuerst die Klemmrollen aus ihrer die Klemmhülse und den Klemmring gegeneinander verklemmenden Position gelöst haben. Die Klemmhülse und der mit ihr verbundene exzentrische Antriebskern werden daraufhin von dem Servomotor gedreht und der Stützring mit dem Getriebeausgangsglied wird in entsprechend untersetzte Drehung versetzt.

Sind das erste und das zweite Getriebeeingangsglied so angeordnet, dass diese den exzentrischen Antriebskern durchragen, so kann die richtungsgeschaltete Kupplung oder der zweirichtungsschaltbare Freilauf in axialer Richtung des Wellgetriebes zwischen der radialflexiblen Abrollbuchse und dem exzentrischen Antriebskern angeordnet werden, wodurch das Überlagerungsgetriebe sehr kleinbauend ausgeführt werden kann.

Das Drehmoment des Servomotors stützt sich bevorzugt an einem fahrzeugfesten Bauteil ab und nicht an einer Lenksäule oder an dem ersten oder zweiten Getriebeeingangsglied.

Der gesamte Aufbau der Überlagerungslenkung ermöglicht, dass die Strom- und/oder Signalleitung zwischen den Komponenten des Lenksystems ohne zusätzliche Stromführungseinrichtungen, wie Schleifer oder Wickelfedern oder dgl. möglich ist. Eine Steigerung der Betriebssicherheit des Lenksystems ist dadurch gegeben.

Es lassen sich mit einer Getriebestufe des Wellgetriebes Übersetzungen ins Langsame von etwa 1:20 bis 1:600 erreichen, wobei mehrer Getriebestufen hintereinander schaltbar sind.

Es sind viele Zähne gleichzeitig im Eingriff, so dass bei der hohen Überdeckung eine mehrfache Drehmomentbelastung gegenüber vergleichbaren Getrieben ermöglicht ist und das Wellgetriebe entsprechend klein baut und eine sichere, spielfreie Drehmoment- und Drehwinkelübertragung zwischen dem ersten Getriebeeingangsglied und dem Getriebeausgangsglied durch das Wellgetriebe gewährleistet ist.

Der Servomotor der Überlagerungslenkung ist bevorzugt als permanenterregter Elektromotor ausgebildet und erzeugt in einem besonders bevorzugten Ausführungsbeispiel der Überlagerungslenkung ein Drehmoment von etwa 6 Nm.

Die Überlagerungslenkung kann als hydraulische, elektrohydraulische oder elektrische Servolenkung ausgeführt sein und eignet sich insbesondere für Personenkraftwagen und leichte Nutzkraftfahrzeuge.

Die Erfindung wird nun näher anhand eines Ausführungsbeispiels beschrieben und anhand der beiliegenden Zeichnung wiedergegeben.
- Fig. 1: zeigt einen teilweisen Längsschnitt durch eine erfindungsgemäße Überlagerungslenkung,
- Fig. 2a: zeigt einen Längsschnitt durch einen zweirichtungsgeschalteten Freilauf der Überlagerungslenkung in Fig. 1,
- Fig. 2b: zeigt einen Querschnitt entlang der Linie II - II durch den zweirichtungsgeschalteten Freilauf in Fig. 2,
- Fig. 3: zeigt einen Querschnitt des zweirichtungsgeschalteten Freilaufs in entriegelter Position von Klemmhülse und Klemmring,
- Fig. 4: zeigt einen Querschnitt des zweirichtungsgeschalteten Freilaufs in verriegelter Position von Klemmhülse und Klemmring.

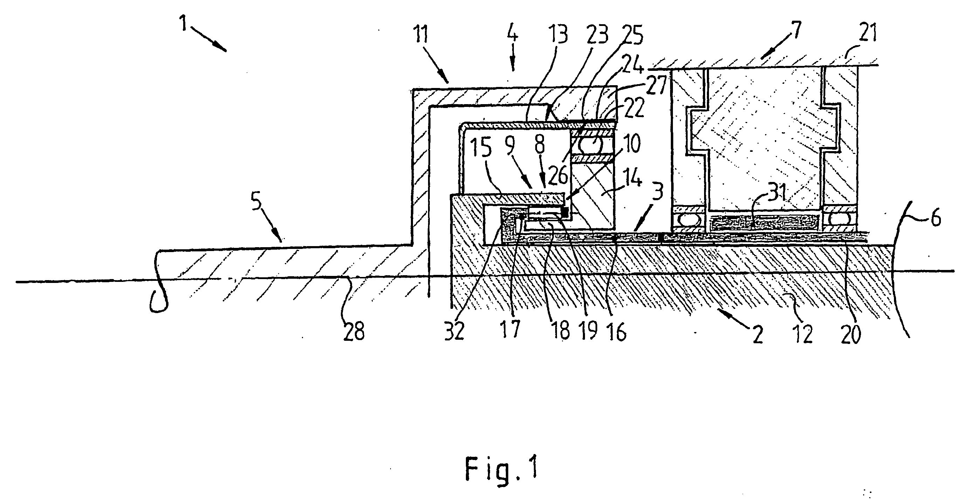

In Figur 1 ist in einer Ansicht und einem teilweisen Längsschnitt eine als Active Steering ausgebildete Überlagerungslenkung 1 für ein Fahrzeug gezeigt. Die Überlagerungslenkung 1 ist als elektrische Überlagerungslenkung aus einem Servomotor 7, der an einem fahrzeugfesten Bauteil 21 abgestützt ist, das nicht die Lenksäule des Fahrzeugs ist, einem Überlagerungsgetriebe 4 mit einem ersten Getriebeeingangsglied 2 das drehfest mit einer Lenkhandhabe 6 verbunden ist und einem zweiten Getriebeeingangsglied 3, sowie mit einem Getriebeausgangsglied 5 gebildet. Das Getriebeausgangsglied 5 ist mit einem Getriebeeingangsglied eines nicht gezeigten Lenkgetriebes wirkverbunden. Das Lenkgetriebe kann Teil einer elektrischen oder hydraulischen Hilfskraftlenkung sein.

Der Servomotor 7 stellt einen zusätzlichen Lenkwinkel auf das Überlagerungsgetriebe 4, das in dem Ausführungsbeispiel in den Figuren 1 bis 4 als Wellgetriebe 11 oder harmonic-drive gebildet ist, bereit. Der Servomotor 7 ist zu diesem Zweck mit dem zweiten Getriebeeingangsglied 3, das als zweite Welle 16 des Überlagerungsgetriebes 4 dient und einem exzentrischen, vorzugsweise ellipsenförmigen Antriebskern 14 drehfest über eine richtungsgeschaltete Kupplung 8 verbindbar. In dem Ausführungsbeispiel in den Figuren 1 bis 4 ist die richtungsgeschaltete Kupplung 8 als Klemmrollenfreilauf 9 und insbesondere als zweirichtungsgeschalteter Freilauf 10 gebildet. Um den Umfang des exzentrischen Antriebskern 14 ist ein flexibles Kugellager 22 aufgezogen. Der exzentrische Antriebskern 14 greift in eine beispielsweise aus elastischem Stahlblech gebildete, topfförmige, radialflexible Abrollbuchse 13 (flex-spline) ein. Der Antriebskern 14 ist drehbar auf einer ersten Welle 12 die das erste Getriebeeingangsglied 2 bildet, angeordnet. Die radialflexible Abrollbuchse 13 weist eine Außenmantelfläche 23 auf, die im axialen Bereich des Kugellagers 22 eine Außenverzahnung 24 trägt. Die Außenverzahnung 24 greift unter Wirkung der ellipsenförmigen Aufweitung der Abrollbuchse 13 mit zwei Umfangsabschnitten in eine Innenverzahnung 25 an einer zylindrischen Stützfläche 26 eines drehfest mit dem Getriebeausgangsglied 5 des Wellgetriebes 11 verbundenen Stützringes 27 (circular-spline) ein. Der Stützring 27 ist konzentrisch zu der Längsachse 28 der ersten und zweiten Welle (12,16) angeordnet. Bei Rotation des Antriebskernes 14 erfolgt die ellipsenförmige Aufweitung in fortlaufendem Wechsel entlang der Innenverzahnung 25. Der innenverzahnte Stützring 27 weist eine größere Zähnezahl als die radialflexible Abrollbuchse 13 auf, wodurch eine Verdrehung des Stützringes 27 pro Umdrehung des Antriebskernes 14 um die Differenz der Zähnezahl erfolgt.

Zur kostengünstigen Darstellung und Montage des Wellgetriebes 11 sind dessen Komponenten so funktional verschaltet, dass es ohne Gehäuse gebaut werden kann.

Die Lenkwelle ist im axialen Bereich des Stützringes 27 somit getrennt und in eine erste Welle 12, die drehfest mit der Lenkhandhabe 6 verbunden ist, und ein Getriebeausgangsglied 5, das wellenartig gebildet ist und drehfest mit dem Stützring 27 verbunden ist, aufgeteilt. Auf diese Weise kann das Getriebeausgangsglied 5 relativ zu dem ersten Getriebeeingangsglied 2 (erste Welle 12) durch das Wellgetriebe 11 verdreht werden und ein von Fahrt- und Fahrzeugparametern abhängiger Lenkwinkel in die Lenkwelle vor dem Lenkgetriebe eingegeben werden.

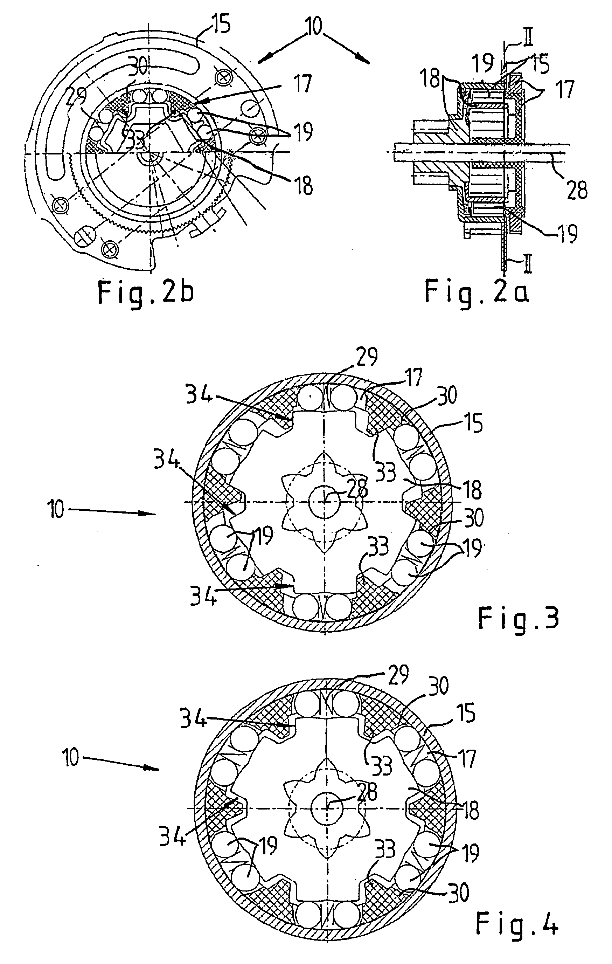

Wie die Figuren 1, 2a und 2b zeigen, ist der zweirichtungsgeschaltete Freilauf 10 aus einem Klemmring 15, der die radiale, äußere Begrenzung des Freilaufs 10 bildet und bevorzugt form- oder kraftschlüssig oder einteilig mit der ersten Welle 12 und der radialflexiblen Abrollbuchse 13 verbunden und gebildet ist, ferner aus einer Klemmhülse 18, die drehfest an dem exzentrischen Antriebskern 14 angeordnet ist und einem Schaltkäfig 17, der drehfest mit der zweiten Welle 16 oder dem zweiten Getriebeeingangsglied 3 angeordnet ist, gebildet. In dem konzentrisch zu der Längsachse 28 angeordneten zweirichtungsgeschalteten Freilauf 10 sind in diskreten tangentialen Abständen je zwei Klemmrollen 19 mit ihren Längsachsen parallel zu der Längsachse 28 und zwischen der Klemmhülse 18 und dem Klemmring 15 tangential verschieblich angeordnet. Wie die Figuren 2b, 3 und 4 zeigen, sind die Klemmrollen 19 mit je einer Feder 29 voneinander beabstandet gehalten. Die Feder 29 bewirkt, wie dies die Figur 4 und auch die Figur 2b zeigen, dass die Klemmrollen 19 einen Klemmverband von Klemmhülse 18 und Klemmring 15 eingehen, sofern der Schaltkäfig 17 und insbesondere dessen Freischaltnocken 30 zwischen den Klemmrollenpaaren nicht durch ein Drehmoment des Servomotors 7 in tangentialer Richtung verschoben werden und die Klemmrollen 19 aus ihrer Klemmposition drängen.

Die in den Figuren 2b und 4 gezeigten Positionen der Klemmrollen 19 und der dargestellte Klemmverband zwischen der Klemmhülse 18 und dem Klemmring 15 bewirken, dass bei Einleitung eines Drehmoments von dem Getriebeausgangsglied 5 über die radialflexible Abrollbuchse 13 auf den exzentrischen Antriebskern 14 und die mit diesem drehfest verbundene Klemmhülse 18 eine nahezu schlupffreie Drehbewegung des ersten Getriebeeingangsgliedes 2 und der Lenkhandhabe 6 erfolgt und umgekehrt. Eine Relativbewegung des Getriebeausgangsgliedes 5 und des ersten Getriebeeingangsgliedes 2 ist bei dieser Leistungsflussumkehr oder bei einem inaktiven Servomotor 7 und einem außer Antrieb seienden, zweiten Getriebeeingangsgliedes 3 nicht möglich. Ein sicherer Betrieb der Überlagerungslenkung 1 ist damit stets gewährleistet.

Bei aktivem Servomotor 7 im Schaltbetrieb, ohne Leistungsflussumkehr, erklärt sich die Funktion der Überlagerungslenkung 1 aus den Figuren 1 und 3 wie folgt:

Das als Hohlwelle 20 ausgebildete und konzentrisch um das erste Getriebeeingangsglied 2 angeordnete zweite Getriebeeingangsglied 3 dreht sich unter Wirkung eines Läufers 31 des Servomotors 7 wahlweise in zwei Drehrichtungen. Die Hohlwelle 20 durchragt den exzentrischen Antriebskern 14 und ist mit einem im Längsschnitt gekröpft gebildeten Abschnitt 32 an dem Schaltkäfig 17 des zweirichtungsgeschalteten Freilaufs 10 festgelegt. Wie Fig. 4 zeigt, weist der Schaltkäfig 17 axial zwischen jeweils ein Paar von Klemmrollen 19 ragende Freischaltnocken 30 und Mitnahmenocken 33 auf. Durch die Drehbewegung der Hohlwelle 20 werden zunächst die Klemmrollen 19 mit Hilfe der Freischaltnocken 30 aus ihrer Klemmposition gebracht und anschließend gelangen die Mitnahmenocken 33 in Anlage an Mitnahmeflächen 34 der Klemmhülse 18, wodurch die Klemmhülse 18 und der mit der Klemmhülse 18 drehfest verbundene exzentrische Antriebskern 14 gedreht werden.

### BEZUGSZEICHENLISTE

| | | | |
|---|---|---|---|
| 1 | Überlagerungslenkung | 26 | Stützfläche, zylindrisch |
| 2 | Getriebeeingangsglied, erstes | 27 | Stützring |
| 3 | Getriebeeingangsglied, zweites | 28 | Längsachse |
| 4 | Überlagerungsgetriebe | 29 | Feder |
| 5 | Getriebeausgangsglied | 30 | Feischaltnocken |
| 6 | Lenkhandhabe | 31 | Läufer |
| 7 | Servomotor | 32 | Abschnitt, v. 20 |
| 8 | Kupplung, richtungsgeschaltet | 33 | Mitnahmenocken |
| 9 | Klemmrollenfreilauf | 34 | Mitnahmefläche |
| 10 | Freilauf, zweirichtungsgeschaltet | 35 | |
| 11 | Wellgetriebe | 36 | |
| 12 | Welle, erste | 37 | |
| 13 | Abrollbuchse, radialflexibel | 38 | |
| 14 | Antriebskern, exzentrisch | 39 | |
| 15 | Klemmring | 40 | |
| 16 | Welle, zweite | 41 | |
| 17 | Schaltkäfig | 42 | |
| 18 | Klemmhülse | 43 | |
| 19 | Klemmrolle | 44 | |
| 20 | Hohlwelle | 45 | |
| 21 | Bauteil, fahrzeugfest | 46 | |
| 22 | Kugellager, flexibel | 47 | |
| 23 | Außenmantelfläche | 48 | |
| 24 | Außenverzahnung | 49 | |
| 25 | Innenverzahnung | 50 | |
| | | | |
| | | | |
| | | | |
| | | | |
| | | | |
| | | | |
| | | | |
| | | | |

## Patentansprüche

1. Überlagerungslenkung für ein Fahrzeug mit einem, ein erstes Getriebeeingangsglied (2) und ein zweites Getriebeeingangsglied (3) aufweisenden Überlagerungsgetriebe (4) zur Überlagerung der an dem ersten und zweiten Getriebeeingangsglied (2,3) auftretenden Drehwinkeln auf ein Getriebeausgangsglied (5) des Überlagerungsgetriebes (4), wobei das erste Getriebeeingangsglied (2) mit einer Lenkhandhabe (6) und das zweite Getriebeeingangsglied (3) mit einem Servomotor (7) wirkverbunden ist, wobei das zweite Getriebeeingangsglied (3) oder der Servomotor (7) über eine richtungsgeschaltete Kupplung (8) auf das Überlagerungsgetriebe (4) so wirkt, dass bei Leistungsflussumkehr oder einer Außerbetriebsstellung des Servomotors (7) eine Relativbewegung des ersten Getriebeeingangsgliedes (2) und des Getriebeausgangsgliedes (5) verhindert ist, **dadurch gekennzeichnet, dass** das Übertagerungsgetriebe (4) ein Wellgetriebe (11) ist.

2. Überlagerungslenkung nach Anspruch 1, **dadurch gekennzeichnet, dass** die richtungsgeschaltete Kupplung (8) ein Klemmfreilauf oder ein Klemmrollenfreilauf (9) ist.

3. Überlagerungslenkung nach Anspruch 2, **dadurch gekennzeichnet, dass** die richtungsgeschaltete Kupplung (8) ein zweirichtungsschaltbarer Freilauf (10) ist.

4. Überlagerungslenkung nach Anspruch 3, **dadurch gekennzeichnet, dass** das erste Getriebeeingangsglied (2) als eine erste Welle (12) ausgebildet ist, die mit einer radialflexiblen Abrollbuchse (13) des Wellgetriebes (11) drehfest verbunden ist, in die ein exzentrischer Antriebskem (14) ragt, wobei die radialflexible Abrollbuchse (13) drehfest mit einem Klemmring (15) der richtungsgeschalteten Kupplung (8) und der exzentrische Antriebskern (14) drehfest mit einer zweiten Welle (16), die das zweite Getriebeeingangsglied (3) bildet, über einen Schaltkäfig (17) der richtungsgeschalteten Kupplung (8) verbunden ist und das Getriebeausgangsglied (5) drehfest mit einer Klemmhülse (18) der richtungsgeschalteten Kupplung (8) verbunden ist, wobei der Schaltkäfig (17) Klemmrollen (19) bei Drehmoment-beaufschlagung durch den Servomotor (7) zwischen der Klemmhülse (18) und dem Klemmring (15) freigibt.

5. Überlagerungslenkung nach einem der Ansprüche 3 oder 4, **dadurch gekennzeichnet, dass** das erste Getriebeeingangsglied (2) den exzentrischen Antriebskern (14) durchragt und das zweite Getriebeeingangsglied (3) als Hohlwelle (20) ausgebildet ist und konzentrisch zu dem ersten Getriebeein-gangsglied (2) angeordnet ist und den exzentrischen Antriebskern (14) durchragt.

6. Überlagerungslenkung nach einem der Ansprüche 3 bis 5, **dadurch gekennzeichnet, dass** die richtungsgeschaltete Kupplung (8) in axialer Richtung des Wellgetriebes (11) zwischen der radialflexiblen Abrollbuchse (13) und dem exzentrischen Antriebskern (14) angeordnet ist.

7. Überlagerungslenkung nach einem der Ansprüche 1 bis 6, **dadurch gekennzeichnet, dass** das Drehmoment des Servomotors (7) an einem fahrzeugfesten anderen Bauteil (21) der Überlagerungslenkung (1) oder des Fahrzeugs abgestützt ist, als an einer Lenksäule oder dem ersten oder zweiten Getriebeeingangsglied (2,3).

8. Überlagerungslenkung nach einem der Ansprüche 1 bis 7, **dadurch gekennzeichnet, dass** der Servomotor (7) ein Elektromotor ist wobei die Stromzufuhr und/oder die Signalleitung zu dem Servomotor (7) ohne eine Übertragungseinrichtung wie Schleifer oder Wickelfedern erfolgt.

9. Überlagerungslenkung nach einem der Ansprüche 1 bis 8, **dadurch gekennzeichnet, dass** der Servomotor (7) ein permanenterregter Elektromotor ist.

10. Überlagerungslenkung nach einem der Ansprüche 1 bis 9, **dadurch gekennzeichnet, dass** der Servomotor (7) ein Drehmoment von etwa 6 Nm erzeugt und die Überlagerungslenkung (1) in einem als Personenkraftwagen oder leichten Nutzkraftwagen ausgebildeten Fahrzeug angeordnet ist.

11. Überlagerungslenkung nach einem der Ansprüche 1 bis 10, **dadurch gekennzeichnet, dass** die Überlagerungslenkung (1) als hydraulische, elektrohydraulische oder elektrische Servolenkung ausgeführt ist.

## Claims

1. Superimposed steering system for a vehicle, having a variable ratio gear unit (4) which has a first gear unit input element (2) and a second gear unit input element (3) for the superimposition of the rotational angles which occur at the first and second gear unit input elements (2, 3) onto a gear unit output element (5) of the variable ratio gear unit (4), the first gear unit input element (2) being operatively connected to a steering handle (6) and the second gear unit input element (3) being operatively connected to a servomotor (7), the second gear unit input element (3) or the servomotor (7) acting on the variable ratio gear unit (4) via a directional clutch (8) in such a way that, when the power flow is reversed or the servomotor (7) is in a nonoperational position, a relative movement of the first gear unit input element (2) and the gear unit output element (5) is prevented, **characterized in that** the variable ratio gear unit (4) is a harmonic drive (11).

2. Superimposed steering system according to Claim 1, **characterized in that** the directional clutch (8) is a clamping freewheel or a clamping roller freewheel (9).

3. Superimposed steering system according to Claim 2, **characterized in that** the directional clutch (8) is a bidirectionally switchable freewheel (10).

4. Superimposed steering system according to Claim 3, **characterized in that** the first gear unit input element (2) is configured as a first shaft (12) which is connected fixedly in terms of rotation to a radially flexible flexspline (13) of the harmonic drive (11), into which flexspline (13) an eccentric drive core (14) protrudes, the radially flexible flexspline (13) being connected fixedly in terms of rotation to a clamping ring (15) of the directional clutch (8), and the eccentric drive core (14) being connected fixedly in terms of rotation via a switching cage (17) of the directional clutch (8) to a second shaft (16) which forms the second gear unit input element (3), and the gear unit output element (5) being connected fixedly in terms of rotation to a clamping sleeve (18) of the directional clutch (8), the switching cage (17) releasing clamping rollers (19) when torque is applied to it by the servomotor (7) between the clamping sleeve (18) and the clamping ring (15).

5. Superimposed steering system according to either of Claims 3 and 4, **characterized in that** the first gear unit input element (2) penetrates the eccentric drive core (14), and the second gear unit input element (3) is configured as a hollow shaft (20), is arranged concentrically with respect to the first gear unit input element (2) and penetrates the eccentric drive core (14).

6. Superimposed steering system according to one of Claims 3 to 5, **characterized in that** the directional clutch (8) is arranged between the radially flexible flexspline (13) and the eccentric drive core (14) in the axial direction of the harmonic drive (11).

7. Superimposed steering system according to one of Claims 1 to 6, **characterized in that** the torque of the servomotor (7) is supported on a different component (21) of the superimposed steering system (1) or the vehicle which is fixed to the vehicle than on a steering column or the first or second gear unit input element (2, 3).

8. Superimposed steering system according to one of Claims 1 to 7, **characterized in that** the servomotor (7) is an electric motor, the current supply and/or the signal forwarding to the servomotor (7) taking place without a transfer device such as sliders or flat spiral springs.

9. Superimposed steering system according to one of Claims 1 to 8, **characterized in that** the servomotor (7) is a permanently excited electric motor.

10. Superimposed steering system according to one of Claims 1 to 9, **characterized in that** the servomotor (7) produces a torque of approximately 6 Nm and the superimposed steering system (1) is arranged in a vehicle which is configured as a passenger car or a light commercial vehicle.

11. Superimposed steering system according to one of Claims 1 to 10, **characterized in that** the superimposed steering system (1) is configured as a hydraulic, electrohydraulic or electric power steering system.

## Revendications

1. Direction mixte pour un véhicule, avec une boîte mixte (4) comportant un premier élément d'entrée de boîte de vitesses (2) et un deuxième élément d'entrée de boîte de vitesses (3) pour la transmission des angles de rotation apparaissant vers le premier et le deuxième élément d'entrée de boîte de vitesses (2, 3) à un élément de sortie de boîte de vitesses(5) de la boîte mixte (4), le premier élément d'entrée de boîte de vitesses (2) étant opérationnellement relié à une manette directionnelle (6) et le deuxième élément d'entrée de boîte de vitesses (3) à un servomoteur (7), le deuxième élément d'entrée de boîte de vitesses (3) ou le servomoteur (7) agissant sur la boîte mixte (4) par le biais d'un embrayage directionnel (8), de sorte à empêcher un mouvement relatif du premier élément d'entrée de boîte de vitesses (2) et de l'élément de sortie de boîte de vitesses (5) lors d'une inversion de flux de puissance ou d'une mise hors service du servomoteur (7), **caractérisée en ce que** la boîte mixte (4) est une transmission harmonique (11).

2. Direction mixte selon la revendication 1, **caractérisée en ce que** l'embrayage directionnel (8) est un mécanisme de serrage à roue libre ou un mécanisme de serrage à rouleaux en roue libre (9).

3. Direction mixte selon la revendication 2, **caractérisée en ce que** l'embrayage directionnel (8) est un mécanisme de roue libre bidirectionnel (10).

4. Direction mixte selon la revendication 3, **caractérisée en ce que** le premier élément d'entrée de boîte de vitesses (2) est conçu comme un premier arbre (12), qui est relié fixe en rotation à une douille de déroulement (13) à flexibilité radiale de la transmission harmonique (11), douille dans laquelle s'enfonce un noyau d'entraînement excentrique (14), la douille de déroulement (13) à flexibilité radiale étant reliée fixe en rotation à une bague de serrage (15) de l'embrayage directionnel (8) et le noyau d'entraînement excentrique (14) étant relié fixe en rotation à un deuxième arbre (16) qui forme le deuxième élément d'entrée de boîte de vitesses (3), par l'intermédiaire d'une cage de changement de vitesses (17) de l'embrayage directionnel (8), et l'élément de sortie de boîte de vitesses (5) étant relié fixe en rotation à une douille de serrage (18) de l'embrayage directionnel (8), la cage de changement de vitesses (17) libérant des rouleaux de serrage (19) lors d'une sollicitation de couple par le servomoteur (7) entre la douille de serrage (18) et la bague de serrage (15).

5. Direction mixte selon l'une des revendications 3 ou 4, **caractérisée en ce que** le premier élément d'entrée de boîte de vitesses (2) traversé le noyau d'entraînement excentrique (14) et le deuxième élément d'entrée de boîte de vitesses (3) est conçu comme un arbre creux (20) placé de façon concentrique par rapport au premier élément d'entrée de boîte de vitesses (2), qui traverse le noyau d'entraînement excentrique (14).

6. Direction mixte selon l'une des revendications 3 à 5, **caractérisée en ce que** l'embrayage directionnel (8) est disposé en direction radiale de la transmission harmonique (11) entre la douille de déroulement (13) à flexibilité radiale et le noyau d'entraînement excentrique (14).

7. Direction mixte selon l'une des revendications 1 à 6, **caractérisée en ce que** le couple de rotation du servomoteur (7) s'appuie sur une autre pièce de construction (21), fixe par rapport au véhicule, de la direction mixte (1) ou du véhicule comme sur une colonne de direction ou sur le premier ou deuxième élément d'entrée de boîte de vitesses (2, 3).

8. Direction mixte selon l'une des revendications 1 à 7, **caractérisée en ce que** le servomoteur (7) est un moteur électrique, l'alimentation électrique et/ou la transmission de signaux vers le servomoteur (7) étant effectuées sans recours à un dispositif de transmission tel qu'un curseur ou un ressort d'enroulement.

9. Direction mixte selon l'une des revendications 1 à 8, **caractérisée en ce que** le servomoteur (7) est un moteur électrique excité en permanence.

10. Direction mixte selon l'une des revendications 1 à 9, **caractérisée en ce que** le servomoteur (7) produit un couple d'environ 6 Nm et **en ce que** la direction mixte (1) est installée dans un véhicule constitué comme une voiture particulière ou un véhicule utilitaire léger.

11. Direction mixte selon l'une des revendications 1 à 10, **caractérisée en ce que** la direction mixte (1) est conçue sous la forme d'une direction hydraulique, électro-hydraulique ou électrique.
